# EUROPÄISCHE PATENTANMELDUNG

(11) **EP 4 749 143 A1**
(43) Veröffentlichungstag der Anmeldung: **27.05.2026**
(21) Anmeldenummer: 25217302.6
(22) Anmeldetag: 20.11.2025
(51) Int. Cl.: F15B 15/19

(54) **VERFAHREN ZUR ERMITTLUNG WENIGSTENS EINER KENNGRÖSSE EINER PROZESSVENTIL-BAUEINHEIT UND PROZESSVENTIL-BAUEINHEIT**

(30) Priorität: 22.11.2024 DE 102024134421
(71) Anmelder: Festo SE & Co. KG, 73734 Esslingen (DE)
(72) Erfinder: Steltner, Dr. Holger, 73730 Esslingen am Neckar (DE); Joachimsthaler, Matthias, 76135 Karlsruhe (DE); Kaluza, Eileen, 73734 Esslingen am Neckar (DE)
(74) Vertreter: Patentanwälte Magenbauer & Kollegen Partnerschaft mbB

(57) **Zusammenfassung**

Die Erfindung betrifft ein Verfahren zur Ermittlung wenigstens einer Kenngröße einer Prozessventil-Baueinheit (20), die einen Stellungsregler (4) und eine von dem Stellungsregler (4) pneumatisch betätigte Antriebseinheit (50) aufweist, wobei die Antriebseinheit (50) über einen pneumatischen Ventilantrieb (3) und eine von dem pneumatischen Ventilantrieb (3) angetriebene Prozessarmatur (1) verfügt, umfassend die Schritte: pneumatisches Betätigen des Ventilantriebs (3) mit einem Arbeitsdruck, um mit einem Ventilglied (2) der Prozessarmatur (1) einen Bewegungsablauf durchzuführen, Erfassen von Druckwerten des Arbeitsdrucks und Positionswerten des Ventilglieds (2) während des Bewegungsablaufs, und Ermitteln der wenigstens einen Kenngröße aus den erfassten Druckwerten und Positionswerten, wobei die wenigstens eine Kenngröße eine Bewegungseigenschaft und/oder eine Reibungseigenschaft der Antriebseinheit (50) betrifft.

## Beschreibung

Die Erfindung betrifft ein Verfahren zur Ermittlung wenigstens einer Kenngröße einer Prozessventil-Baueinheit, die einen Stellungsregler und eine von dem Stellungsregler pneumatisch betätigbare Antriebseinheit aufweist, wobei die Antriebseinheit über einen pneumatischen Ventilantrieb und eine von dem pneumatischen Ventilantrieb angetriebene Prozessarmatur verfügt.

Die Gerätesoftware des Stellungsreglers beinhaltet üblicherweise eine Initialisierungsroutine, die nach der Montage des Stellungsreglers an den pneumatischen Ventilantrieb und Anschluss an eine Druckluftversorgung ausgeführt wird. Dabei werden durch passende Ansteuerung von Pneumatikventilen des Stellungsreglers gezielt einige Antriebsbewegungen ausgeführt. Aus Messsignalen (v.a. der Position des Ventilglieds der Prozessarmatur), die dabei aufgenommen werden, lassen sich Kenngrößen ableiten, die dann dazu verwendet werden können, automatisch geeignete Regelparameter für eine von dem Stelllungsregler durchzuführende Regelung, beispielsweise eine Positionsregelung des Ventilglieds, zu finden.

Beispielsweise kann nach dem Einlernen der Endlagen eine periodische Bewegung um die Mittellage der Antriebsauslenkung erzeugt werden. Die Eigenschaften dieser erzwungenen Schwingung können dann genutzt werden, um mit Hilfe einer vorgegebenen Berechnungsvorschrift die Koeffizienten für eine PID-Regelung festzulegen.

In der Praxis kann es vorkommen, dass sich durch diesen Ansatz für manche Antriebseinheiten - also für manche Kombinationen von Ventilantrieben und Prozessarmaturen - Regelkoeffizienten ergeben, mit denen die gewünschten Regelungseigenschaften nicht immer erreicht werden. Insbesondere scheinen Unterschiede zwischen Reibungscharakteristika von Membranantrieben mit Regelarmaturen einerseits und rotativen Kolbenantrieben mit Kugelhahn- oder Klappenarmaturen andererseits bei den etablierten Verfahren nicht ausreichend Einfluss zu haben, was dann beispielsweise zum vermehrten Auftreten von Überschwingen beim Einregeln führen kann.

Eine Aufgabe der Erfindung besteht darin, ein Zusammenspiel zwischen dem Stellungsregler und der Antriebseinheit zu verbessern.

Die Aufgabe wird gelöst durch das Verfahren gemäß Anspruch 1. Das Verfahren umfasst die Schritte: pneumatisches Betätigen des Ventilantriebs mit einem Arbeitsdruck, um mit einem Ventilglied der Prozessarmatur einen Bewegungsablauf durchzuführen, Erfassen von Druckwerten des Arbeitsdrucks und Positionswerten des Ventilglieds während des Bewegungsablaufs, und Ermitteln der wenigstens einen Kenngröße aus den erfassten Druckwerten und Positionswerten, wobei die wenigstens eine Kenngröße eine Bewegungseigenschaft und/oder eine Reibungseigenschaft der Antriebseinheit betrifft.

Die wenigstens eine Kenngröße umfasst beispielsweise eine Haftreibungs-Kenngröße, die eine der Bewegung des Ventilglieds entgegenwirkende Haftreibung der Antriebseinheit beschreibt, und/oder eine Hysterese-Kenngröße, die eine Hysterse eines Druck-Positions-Verlaufs beschreibt, wobei der Druck der Arbeitsdruck ist und die Position die Position des Ventilglieds ist, und/oder eine Nachlauf-Kenngröße, die einen Nachlauf des Ventilglieds nach Beendigung der pneumatischen Betätigung beschreibt. Bevorzugt wird auf Basis der wenigstens einen Kenngröße (vorzugsweise auf Basis mehrerer oder sämtlicher Kenngrößen) wenigstens ein Regelungsparameter des Stellungsreglers angepasst.

Durch die Ermittlung der genannten Kenngröße kann der Stellungsregler über die Eigenschaften der vorliegenden Antriebseinheit - also der vorliegenden Kombination aus Ventilantrieb und Prozessarmatur - informiert werden und dadurch seinen Betrieb an diese Antriebseinheit anpassen. Auf diese Weise kann das Zusammenspiel zwischen dem Stellungsregler und der Antriebseinheit verbessert werden.

Insbesondere können mit dem beschriebenen Ansatz Bewegungseigenschaften der Antriebseinheit explizit ermittelt werden, um bei einer spezifischen Auslegung der von dem Stellungsregler durchzuführenden Positionsregelung berücksichtigt zu werden.

Vorzugsweise kann differenziert die Ausprägung unterschiedlicher Bewegungseigenschaften der Antriebseinheit in eine Prozedur zur Auslegung der Positionsregelung einfließen. Das kann sich konkret auf eine Festlegung von Koeffizienten für die Positionsregelung beziehen, aber beispielsweise auch eine Parametrierung eines Störgrößenbeobachters in einer (von dem Stellungsregler durchzuführenden) Vorsteuerung beinhalten. Dadurch kann am Ende eine bessere Regel-Performance erzielt werden, beispielsweise in Form von weniger ausgeprägten Überschwingern.

Optional kann der Stellungsregler bei zu extremen Indikatorwerten - also bei wenigstens einer Kenngröße, die außerhalb eines vorbestimmten Normalbereichs liegt - darauf schließen, dass die Antriebseinheit in der vorliegenden Konstellation nicht regelbar ist.

Vorteilhafte Weiterbildungen sind Gegenstand der Unteransprüche.

Die Erfindung betrifft ferner eine Prozessventil-Baueinheit, die einen Stellungsregler und eine von dem Stellungsregler pneumatisch betätigbare Antriebseinheit aufweist, wobei die Antriebseinheit über einen Ventilantrieb und eine von dem Ventilantrieb angetriebene Prozessarmatur verfügt, wobei der Stellungsregler ausgebildet ist, den Ventilantrieb mit einem Arbeitsdruck pneumatisch zu betätigen, um mit einem Ventilglied der Prozessarmatur einen Bewegungsablauf durchzuführen, Druckwerte des Arbeitsdrucks und Positionswerte des Ventilglieds während des Bewegungsablaufs zu erfassen, und wenigstens eine Kenngröße aus den erfassten Druckwerten und Positionswerten zu ermitteln, wobei die wenigstens eine Kenngröße eine Bewegungseigenschaft und/oder eine Reibungseigenschaft der Antriebseinheit betrifft.

Weitere exemplarische Details sowie beispielhafte Ausführungsformen werden nachstehend unter Bezugnahme auf die Figuren erläutert. Dabei zeigt
- Figur 1: eine schematische Darstellung eines Systems mit einer Prozessventil-Baueinheit,
- Figur 2: einen Druck-Positions-Verlauf eines Bewegungsablaufs mit mehreren Bewegungsschritten,
- Figur 3: einen Druck-Positions-Verlauf eines Bewegungsablaufs, bei dem Bewegungen in zwei verschiedene Richtungen erfolgen und eine Hysterese gegeben ist,
- Figur 4: einen Druck-Positions-Verlauf, bei dem ein Nachlauf erkennbar ist, und
- Figur 5: ein Flussdiagramm einer Kenngröße-Ermittlungsprozedur zur Ermittlung wenigstens einer Kenngröße.

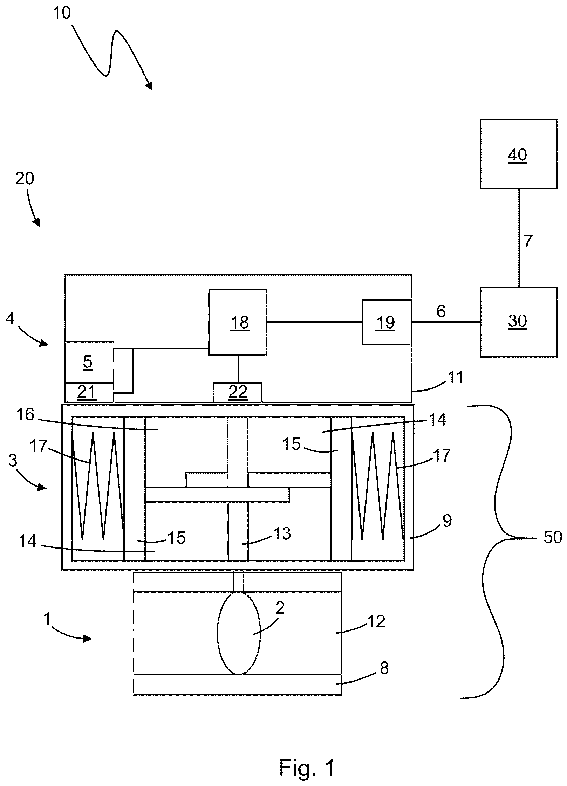

Die Figur 1 zeigt ein System 10, das eine Prozessventil-Baueinheit 20 und optional eine übergeordnete Steuerung 30 und/oder einen Cloud-Server 40 umfasst. Die Prozessventil-Baueinheit 20 ist exemplarisch über eine Kommunikationsleitung 6, insbesondere einen Feldbus, mit der übergeordneten Steuerung 30 verbunden. Die übergeordnete Steuerung 30 ist exemplarisch über ein Weitverkehrsnetz 7, beispielsweise das Internet, mit dem Cloud-Server 40 verbunden.

Gemäß einer möglichen Ausgestaltung kann die Prozessventil-Baueinheit 20 über ein Gateway, insbesondere ein IoT-Gateway, und/oder direkt mit dem Cloud-Server verbunden sein.

Die Prozessventil-Baueinheit 20 dient für den Einsatz in der Prozessautomatisierung. Vorzugsweise dient die Prozessventil-Baueinheit 20 dazu, einen Fluss eines Prozessfluids zu beeinflussen. Das System 10 ist eine exemplarische Anwendungsumgebung der Prozessventil-Baueinheit 20. Die Prozessventil-Baueinheit 20 kann auch für sich genommen - also insbesondere ohne die übergeordnete Steuerung 30 und/oder den Cloud-Server 40 - bereitgestellt werden.

Die Prozessventil-Baueinheit 20 umfasst einen Stellungsregler 4 und eine von dem Stellungsregler 4 pneumatisch betätigbare Antriebseinheit 50. Die Antriebseinheit 50 verfügt über einen pneumatischen Ventilantrieb 3 und eine von dem pneumatischen Ventilantrieb 3 angetriebene Prozessarmatur 1 mit einem Ventilglied 2. Der Stellungsregler 4 verfügt über eine pneumatische Ventileinrichtung 5 zur pneumatischen Betätigung des pneumatischen Ventilantriebs 3.

Beispielsweise verfügt die Prozessarmatur 1 über ein Prozessarmatur-Gehäuse 8, der Ventilantrieb 3 über ein Ventilantrieb-Gehäuse 9 und der Stellungsregler 4 über ein Stellungsregler-Gehäuse 11. Das Ventilantrieb-Gehäuse 9 ist an dem Prozessarmatur-Gehäuse 8 befestigt und das Stellungsregler-Gehäuse 11 ist an dem Ventilantrieb-Gehäuse 9 befestigt. Exemplarisch ist das Ventilantrieb-Gehäuse 9 mit seiner Unterseite an der Oberseite des Prozessarmatur-Gehäuses 8 befestigt und das Stellungsregler-Gehäuse 11 ist mit seiner Unterseite an der Oberseite des Ventilantrieb-Gehäuses 9 befestigt.

Das Prozessarmatur-Gehäuse 8 ist exemplarisch rohrförmig ausgeführt und definiert einen Prozessfluidkanal 12, der das Prozessfluid führt. Im Prozessfluidkanal 12 ist das Ventilglied 2 angeordnet, um den Fluss des Prozessfluids zu steuern, insbesondere wahlweise zu sperren oder freizugeben.

Der Ventilantrieb 3 verfügt über ein Antriebselement 13, das mit dem Ventilglied 2 gekoppelt ist, so dass über eine Antriebsbewegung, insbesondere eine Antriebs-Drehbewegung, des Antriebselements 13 die Position des Ventilglieds 2 veränderbar ist. Der Ventilantrieb 3 verfügt ferner über eine Kolbenanordnung 15, über die das Antriebselement 13 in die Antriebs-Bewegung versetzt werden kann. Das Ventilglied 2, das Antriebselement 13 und die Kolbenanordnung 15 sollen zusammen als Stellanordnung bezeichnet werden.

Der Ventilantrieb 3 verfügt über wenigstens eine Druckkammeranordnung 14, die von der Ventileinrichtung 5 pneumatisch betätigbar ist, um das Antriebselement 13 in die Antriebsbewegung zu versetzen. Die pneumatische Betätigung erfolgt durch Zuführen und/oder Ablassen von Druckluft in/aus der Druckkammeranordnung 14. Durch die pneumatische Betätigung wird in der Druckkammeranordnung 14 ein Druck eingestellt, der auch als Arbeitsdruck bezeichnet werden soll. Bevorzugt umfasst die Ventileinrichtung 5 ein oder mehrere Ventile, insbesondere Pneumatikventile, mittels derer die Betätigung des Ventilantriebs 3 erfolgt. Exemplarisch umfasst die Druckkammeranordnung 14 eine erste Druckkammer 16, der über die Ventileinrichtung 5 Druckluft zugeführt und abgeführt werden kann.

Der Ventilantrieb 3 ist bevorzugt einfachwirkend ausgeführt, so dass die Druckkammeranordnung 14 zweckmäßigerweise nur eine Druckkammer - die erste Druckkammer 16 - aufweist. Durch den in der ersten Druckkammer 16 herrschenden Druck - der auch als Arbeitsdruck bezeichnet werden soll - wird eine Antriebskraft bereitgestellt, die (über die Kolbenanordnung 15 und das Antriebselement 13) das Ventilglied 2 in Richtung hin zu einer ersten Endlage des Ventilglieds 2 drängt, insbesondere eine Endlage, in der das Ventilglied 2 den Prozessfluidkanal 12 freigibt. Der Ventilantrieb 3 verfügt zweckmäßigerweise über ein Federelement 17, das eine Rückstellkraft bereitstellt, die (über die Kolbenanordnung 15 und das Antriebselement 13) das Ventilglied 2 in Richtung weg von der ersten Endlage drängt. Zweckmäßigerweise drängt die Rückstellkraft das Antriebselement 13 in eine zweite Endlage, in der das Ventilglied 2 den Prozessfluidkanal 12 sperrt.

Gemäß einer nicht gezeigten alternativen Ausgestaltung verfügt der Ventilantrieb ferner über eine zweite Druckkammer und zweckmäßigerweise nicht über das Federelement 17. Der Ventilantrieb ist exemplarisch doppeltwirkend ausgeführt. Bei der doppeltwirkenden Ausführung ist der Arbeitsdruck beispielsweise der Differenzdruck zwischen den beiden Druckkammern.

Der Ventilantrieb 3 ist als Kolbenantrieb, exemplarisch als Zahnstangen-Ritzel-Anrieb, ausgeführt. Die Kolbenanordnung 15 verfügt über wenigstens eine Zahnstange, die mit einem Ritzel des Antriebselements 13 in Eingriff steht. Alternativ kann der Ventilantrieb 3 auch anders ausgeführt sein, beispielsweise als Membranantrieb.

Der Stellungsregler 4 umfasst eine Steuereinheit 18, die insbesondere als Mikrocontroller ausgeführt ist, und vorzugsweise eine Kommunikationseinheit 19, die insbesondere zur Kommunikation mit der übergeordneten Steuerung 30 und/oder mit dem Cloud-Server 40 dient.

Der Stellungsregler 4 umfasst die Ventileinrichtung 5 und ist ausgebildet, mittels der Ventileinrichtung 5 Druckluft in die Druckkammeranordnung 14 einzulassen und/oder mittels der Ventileinrichtung 5 Druckluft aus der Druckkammeranordnung 14 abzulassen, um den Druck in der Druckkammeranordnung 14, insbesondere der ersten Druckkammer 16, einzustellen.

Der Stellungsregler 4 umfasst zweckmäßigerweise ferner eine Drucksensoreinrichtung 21 und ist ausgebildet, mittels der Drucksensoreinrichtung 21 den Druck der ersten Druckkammer 16, insbesondere den Arbeitsdruck zu erfassen. Bei einer doppeltwirkenden Ausführung des Ventilantriebs ist die Drucksensoreinrichtung 21 zweckmäßigerweise ferner ausgebildet, einen in der zweiten Druckkammer des Ventilantriebs herrschenden Druck zu erfassen und/oder den Differenzdruck zwischen den beiden Druckkammern zu erfassen.

Der Stellungsregler 4 umfasst zweckmäßigerweise ferner eine Positionssensoreinrichtung 22 und ist ausgebildet, mittels der Positionssensoreinrichtung 22 eine Position, insbesondere eine Drehstellung, des Ventilglieds 2 zu erfassen, beispielsweise durch eine Erfassung der Position des Antriebselements 13, aus der auf die Position des Ventilglieds 2 geschlossen werden kann.

Zweckmäßigerweise gibt die übergeordnete Steuerung 30 einen Steuerbefehl an den Stellungsregler 4 aus, insbesondere über die Kommunikationsleitung 6. Der Steuerbefehl gibt beispielsweise eine Soll-Position für das Ventilglied 2 vor. Der Stellungsregler 4 ist vorzugsweise ausgebildet, auf Basis des Steuerbefehls eine Stellungsregelung des Ventilglieds 2 durchzuführen. Hierzu vergleicht der Stellungsregler 4 die über die Positionssensoreinrichtung 22 erfasste Position mit der durch den Steuerbefehl vorgegebenen Soll-Position und stellt auf Basis des Vergleichs den Arbeitsdruck mittels der Ventileinrichtung 5 so ein, dass sich die Position hin zur Soll-Position verändert.

Im Folgenden soll näher auf eine Ermittlung wenigstens einer Kenngröße eingegangen werden.

Der Stellungsregler 4 ist ausgebildet, den Ventilantrieb 3 mit einem Arbeitsdruck pneumatisch zu betätigen, um mit dem Ventilglied 2 einen Bewegungsablauf durchzuführen. Der Stellungsregler 4 ist ferner ausgebildet, während des Bewegungsablaufs Druckwerte des Arbeitsdrucks und Positionswerte des Ventilglieds 2 zu erfassen. Die Erfassung der Druckwerte erfolgt insbesondere mit der Drucksensoreinrichtung 21. Die Erfassung der Positionswerte erfolgt insbesondere mit der Positionssensoreinrichtung 22. Der Stellungsregler ist ausgebildet, die wenigstens eine Kenngröße auf Basis der erfassten Druckwerte und der erfassten Positionswerte zu ermitteln, wobei die wenigstens eine Kenngröße eine Bewegungseigenschaft und/oder eine Reibungseigenschaft der Antriebseinheit 50 betrifft.

Gemäß einer alternativen Ausgestaltung kann die Ermittlung der wenigstens einen Kenngröße von der übergeordneten Steuerung 30 oder dem Cloud-Server 40 durchgeführt werden. Zu diesem Zweck können die Druckwerte und/oder Positionswerte an die Steuerung 30 oder den Cloud-Server 40 übertragen werden.

Die wenigstens eine Kenngröße umfasst beispielsweise eine Haftreibungs-Kenngröße, die eine einer Bewegung des Ventilglieds 2 entgegenwirkende Haftreibung der Antriebseinheit 50. beschreibt. Beispielsweise beschreibt die Haftreibungs-Kenngröße eine Haftreibung der Stellanordnung, also insbesondere die gesamte auf das Ventilglied 2, das Antriebselement 13 und die Kolbenanordnung 15 wirkende Haftreibung.

Die wenigstens eine Kenngröße kann beispielsweise eine Hysterese-Kenngröße umfassen, die eine Hysterese eines Druck-Positions-Verlaufs beschreibt, wobei der Druck der Arbeitsdruck ist und die Position die Position des Ventilglieds 2 ist.

Die wenigstens eine Kenngröße kann beispielsweise eine Nachlauf-Kenngröße umfassen, die einen Nachlauf des Ventilglieds 2 nach Beendigung einer pneumatischen Betätigung beschreibt. Mit dem Begriff "Nachlauf" ist eine Positionsänderung des Ventilglieds 2 gemeint.

Bevorzugt ist der Stellungsregler 4 ausgebildet, wenigstens einen Regelungsparameter des Stellungsreglers 4 auf Basis der wenigstens einen Kenngröße anzupassen. Der wenigstens eine Regelungsparameter umfasst insbesondere einen Regelungsparameter einer von dem Stellungsregler 4 durchgeführten Regelung der Antriebseinheit 50, beispielsweise einen Regelungsparameter einer Positionsregelung des Ventilglieds 2. Der wenigstens eine Regelungsparameter umfasst beispielsweise einen Regelungskoeffizienten, insbesondere einen Regelungskoeffizienten einer PID-Regelung. Ferner kann der wenigstens eine Regelungsparameter wenigstens einen Parameter eines Störgrößenbeobachters in einer (von dem Stellungsregler 4 durchzuführenden) Vorsteuerung umfassen.

Zweckmäßigerweise führt der Stellungsregler 4 die vorstehend genannte pneumatische Betätigung des Ventilantriebs 3, die Erfassung der Druckwerte und Positionswerte und die Ermittlung der wenigstens einen Kenngröße im Rahmen einer Kenngröße-Ermittlungsprozedur durch. Die Kenngröße-Ermittlungsprozedur wird beispielsweise im Rahmen einer Systeminitialisierung des Stellungsreglers 4 durchgeführt. Die Systeminitialisierung wird beispielsweise für die Inbetriebnahme des Stellungsreglers 4 durchgeführt, insbesondere, nachdem der Stellungsregler 4 an den Ventilantrieb 3 montiert wurde.

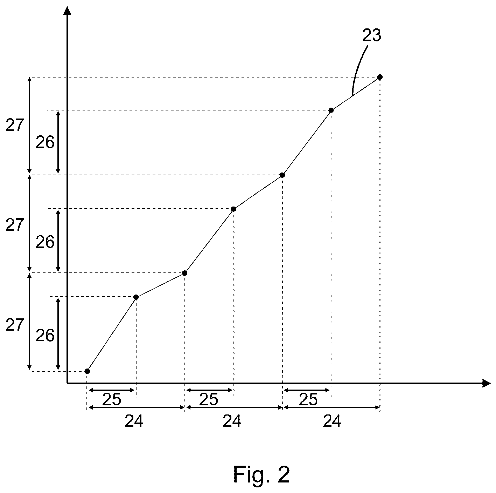

Unter Bezugnahme auf die Figuren 2, 3 und 4 soll im Folgenden näher auf die Ermittlung der wenigstens einen Kenngröße eingegangen werden. Die Figuren 2, 3 und 4 zeigen Schaubilder von Druck-Positionsverläufen 23. Auf den horizontalen Achsen ist die Position des Ventilglieds 2 aufgetragen und auf den vertikalen Achsen der Arbeitsdruck.

Bevorzugt umfasst der Bewegungsablauf, der mit dem Ventilglied 2 durchgeführt wird, eine Mehrzahl an aufeinanderfolgenden, in eine erste Richtung gerichteten ersten Bewegungsschritten 24. In der Figur 2 sind exemplarisch drei erste Bewegungsschritte 24 gezeigt. Vorzugsweise umfasst der Bewegungsablauf mindestens fünf oder mindestens zehn erste Bewegungsschritte 24. Vorzugsweise wird das Ventilglied 2 bei jedem ersten Bewegungsschritt 24 um den gleichen Teilhub - also insbesondere um die gleiche Positionsdifferenz - bewegt. Die Positionsdifferenz soll auch als Schrittlänge bezeichnet werden. Insbesondere haben alle ersten Bewegungsschritte 24 die gleiche Schrittlänge. Die ersten Bewegungsschritte 24 werden durch eine entsprechende pneumatische Betätigung durch den Stellungsregler 4 bewirkt.

Nach jedem ersten Bewegungsschritt 24 wird eine Wartezeit eingehalten, bevor der direkt nachfolgende erste Bewegungsschritt 24 begonnen wird. Die Wartezeit beträgt beispielsweise wenigstens eine oder wenigstens mehrere Sekunden. Die Wartezeit kann beispielsweise so gewählt sein, dass nach Ablauf der Wartezeit der Arbeitsdruck und/oder die Position des Ventilglieds 2 stabil ist. Die Wartezeit wird durch den Stellungsregler 4 bewirkt, also beispielsweise dadurch, dass der Stellungsregler 4 zwischen zwei aufeinanderfolgenden ersten Bewegungsschritten 24 für die Dauer der Wartezeit eine Zufuhr von Druckluft in die erste Druckkammer 16 unterbricht.

Bevorzugt wird für jeden ersten Bewegungsschritt 24 wenigstens ein erster Druckwert des Arbeitsdrucks und ein erster Positionswert des Ventilglieds 2 erfasst, insbesondere von dem Stellungsregler 4. Beispielsweise wird der erste Druckwert mittels der Drucksensoreinrichtung 21 und der erste Positionswert mittels der Positionssensoreinrichtung 22 erfasst.

Die wenigstens eine Kenngröße wird auf Basis der erfassten ersten Druckwerte und der erfassten ersten Positionswerte ermittelt, insbesondere von dem Stellungsregler 4.

Exemplarisch erfasst der Stellungsregler 4 für jeden ersten Bewegungsschritt 24 beim Erreichen eines vorbestimmten Teils 25 der Schrittlänge des jeweiligen ersten Bewegungsschritts 24 einen Teil-Schrittlänge-Druckwert 26. Der Teil-Schrittlänge-Druckwert 26 ist die Differenz zwischen dem Arbeitsdruck beim Erreichen des Teils 25 der Schrittlänge und dem Arbeitsdruck vor dem Beginn des jeweiligen ersten Bewegungsschritts 24. Bevorzugt ist der Teil 25 die Hälfe der Schrittlänge. Bevorzugt erfasst der Stellungsregler 4 also für jeden ersten Bewegungsschritt 24 beim Erreichen der Hälfte der Schrittlänge des jeweiligen ersten Bewegungsschritts 24 den jeweiligen Teil-Schrittlänge-Druckwert 26, wobei der Teil-Schrittlänge-Druckwert 26 die Differenz zwischen dem Arbeitsdruck beim Erreichen der Hälfte der Schrittlänge und dem Arbeitsdruck vor dem Beginn des jeweiligen ersten Bewegungsschritts 24 ist.

Exemplarisch erfasst der Stellungsregler 4 beim Erreichen der vollen Schrittlänge des jeweiligen ersten Bewegungsschritts 24 einen Volle-Schrittlänge-Druckwert 27, der die Differenz zwischen dem Arbeitsdruck beim Erreichen der vollen Schrittlänge und dem Arbeitsdruck vor Beginn des jeweiligen ersten Bewegungsschritts 24 ist.

Bevorzugt umfasst die wenigstens eine Kenngröße die Haftreibungs-Kenngröße, die auf Basis der Teil-Schrittlänge-Druckwerte 26 und der Volle-Schrittlänge-Druckwerte 27 berechnet wird (insbesondere von dem Stellungsregler 4) und eine Haftreibung der Antriebseinheit 50 anzeigt.

Bevorzugt wird für jeden ersten Bewegungsschritt 24 eine jeweiliger Haftreibungswert auf Basis des jeweiligen Teil-Schrittlänge-Druckwerts 26 und des jeweiligen Volle-Schrittlänge-Druckwerts 27 berechnet. Aus diesen Haftreibungswerten kann dann die Haftreibungs-Kenngröße berechnet werden, beispielsweise als Mittelwert der Haftreibungswerte.

Die Haftreibungswerte werden (insbesondere von dem Stellungsregler 4) beispielsweise als Quotienten, insbesondere als Druckdifferenzquotienten, der Teil-Schrittlänge-Druckwerte 26 zu den Volle-Schrittlänge-Druckwerten 27 berechnet, insbesondere skaliert mit den jeweils zugehörigen Positionsänderungen. Beispielsweise berechnet der Stellungsregler 4 jeden Haftreibungswert dadurch, dass der Teil-Schrittlängen-Druckwert 26 durch den vorbestimmten Teil 25 der Schrittlänge geteilt wird, um einen skalierten Teil-Schrittlängen-Druckwert zu erhalten, der Volle-Schrittlänge-Druckwert 27 durch die volle Schrittlänge geteilt wird, um einen skalierten Volle-Schrittlänge-Druckwert zu erhalten, und der skalierte Teil-Schrittlänge-Druckwert durch den Volle-Schrittlänge-Druckwert geteilt wird, um den Haftreibungswert zu erhalten.

Dieser Ansatz berücksichtigt den Aspekt, dass insbesondere bei Kolben-Schwenkantrieben ein schleichender Bewegungsbeginn des Ventilglieds 2 auftreten kann, der es schwierig macht, mit konventionellen Verfahren einen zuverlässigen Wert für den Losbrechdruck zu bestimmen. Bei dem vorstehend erläuterten Ansatz kann hingegen davon ausgegangen werden, dass bei Erreichen des vorbestimmten Teils 25, insbesondere der Hälfte, der Schrittlänge, der schleichende Bewegungsstart (sofern er auftritt) abgeschlossen ist. Die Druckänderung bis zum Abschluss des vorbestimmten Teils 25 der Schrittlänge sollte also das Losbrechen des Ventilglieds 2 beinhalten, während die weitere Druckänderung bis zur vollen Schrittlänge dann nichts mehr mit dem Losbrechen zu tun hat. Das Verhältnis der Druckänderungen für die halbe und volle Schrittlänge sollte also mit zunehmender Haftreibung steigen.

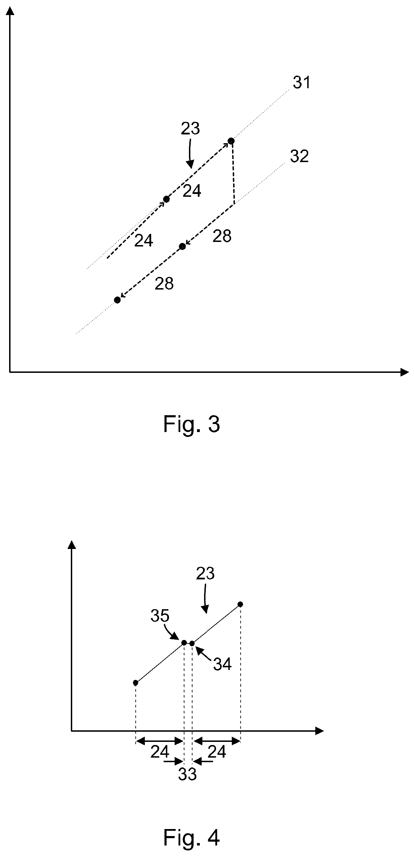

In der Figur 3 ist ein Druck-Positions-Verlauf gezeigt, bei dem sich das Ventilglied 2 in zwei entgegengesetzte Bewegungen bewegt und eine Hysterese gegeben ist.

Bevorzugt umfasst der mit dem Ventilglied 2 durchgeführte Bewegungsablauf (zusätzlich zu den ersten Bewegungsschritten 24) eine Mehrzahl an aufeinanderfolgenden, in eine der ersten Richtung entgegengesetzten zweite Richtung gerichteten zweiten Bewegungsschritten 28. Der Stellungsregler 4 hält nach jedem zweiten Bewegungsschritt 28 eine Wartezeit ein, bevor der direkt nachfolgende zweite Bewegungsschritt 28 begonnen wird. Die Wartezeit beträgt beispielsweise wenigstens eine oder wenigstens mehrere Sekunden. Die Wartezeit kann beispielsweise so gewählt sein, dass nach Ablauf der Wartezeit der Arbeitsdruck und/oder die Position des Ventilglieds 2 stabil ist. Die Wartezeit wird durch den Stellungsregler 4 bewirkt, also beispielsweise dadurch, dass der Stellungsregler 4 zwischen zwei aufeinanderfolgenden ersten Bewegungsschritten 24 für die Dauer der Wartezeit eine Abfuhr von Druckluft aus der ersten Druckkammer 16 unterbricht.

Der Stellungsregler 4 erfasst für jeden zweiten Bewegungsschritt 28 wenigstens einen zweiten Druckwert des Arbeitsdrucks und einen zweiten Positionswert des Ventilglieds und ermittelt die wenigstens eine Kenngröße unter Berücksichtigung der zweiten Druckwerte und der zweiten Positionswerte.

Exemplarisch umfasst die wenigstens eine Kenngröße die Hysterese-Kenngröße, die eine Hysterese eines von den ersten Druckwerten, ersten Positionswerte, zweiten Druckwerten und zweiten Positionswerten gebildeten Druck-Positions-Verlaufs betrifft. Exemplarisch beschreibt die Hysterese einen Abstand (beispielsweise in Bezug auf den Druck oder die Position) eines ersten Teils des Druck-Positions-Verlaufs zu einem zweiten Teil des Druck-Positions-Verlaufs, wobei der erste Teil nur die ersten Bewegungsschritte 24 umfasst und der zweite Teil nur die zweiten Bewegungsschritte 28 umfasst. Der erste Teil soll auch als erster Druck-Positions-Verlauf bezeichnet werden und der zweite Teil als zweiter Druck-Positions-Verlauf.

Beispielsweise ermittelt der Stellungsregler 4 die Hysterese-Kenngröße auf Basis einer ersten Ausgleichsgeraden 31 und einer zweiten Ausgleichsgeraden 32. Der Stellungsregler 4 ermittelt die erste Ausgleichsgerade 31 für den ersten Druck-Positions-Verlauf der ersten Druckwerte und ersten Positionswerte. Der Stellungsregler ermittelt die zweite Ausgleichsgerade 32 für den zweiten Druck-Positions-Verlauf der zweiten Druckwerte und zweiten Positionswerte. Die Ausgleichsgeraden 31, 32 werden so ermittelt, dass sie möglichst nahe an den jeweils zugehörigen Druckwerten und Positionswerten liegen.

Der Stellungsregler 4 ermittelt die Hysterese-Kenngröße insbesondere als Abstand (beispielsweise in Bezug auf den Druck oder die Position) zwischen den beiden Ausgleichsgeraden 31, 32. Der Abstand ist beispielsweise der Abstand (in Bezug auf den Druck) an einer vorbestimmten Position des Ventilglieds 2, beispielsweise in einem mittleren Bereich, insbesondere der Mitte, des Druck-Positions-Verlaufs oder des Gesamthubs des Ventilglieds 2. Ferner kann der Abstand der Durchschnittsabstand zwischen den beiden Ausgleichsgeraden 31, 32 sein.

Die Figur 4 zeigt einen Druck-Positions-Verlauf, bei dem nach dem Ende eines Bewegungsschritts 24 ein Nachlauf 33 des Ventilglieds 2 auftritt.

Bevorzugt umfasst die wenigstens eine Kenngröße die Nachlauf-Kenngröße, die einen Nachlauf 33 des Ventilglieds 2 nach einer Beendigung einer pneumatischen Betätigung des Ventilantriebs 3 betrifft. Die Beendigung der pneumatischen Betätigung erfolgt beispielsweise dadurch, dass der Stellungsregler 4 eine Zufuhr von Druckluft in die erste Druckammer 16 stoppt oder eine Abfuhr von Druckluft aus der ersten Druckkammer 16 stoppt. Dies erfolgt zweckmäßigerweise am Ende jedes Bewegungsschritts.

Der Stellungsregler 4 erfasst einen Start-Positionswert 34, der eine Startposition des Ventilglieds 2 bei einem Bewegungsschritt 24 anzeigt. Der Stellungsregler 4 ermittelt die Nachlauf-Kenngröße auf Basis des Start-Positionswerts 34 und eines End-Positionswerts 35 eines direkt vorangegangenen Bewegungsschritts 24. Die Nachlauf-Kenngröße ist beispielsweise die Differenz aus dem Start-Positionswert 34 und dem End-Positionswert 35.

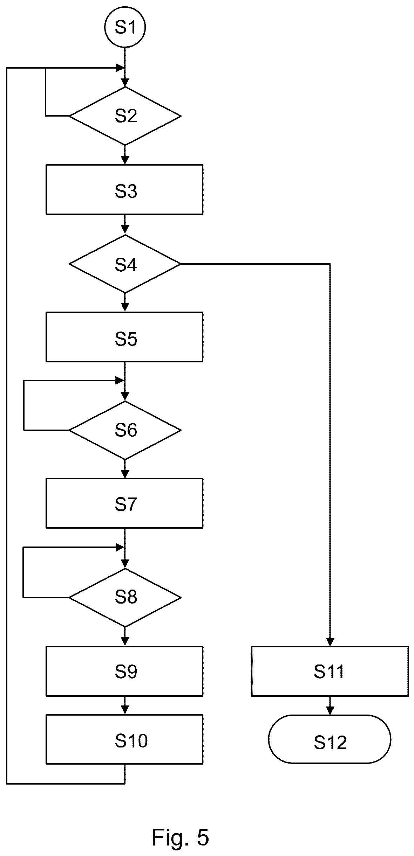

Unter Bezugnahme auf die Figur 5 soll auf eine Kenngröße-Ermittlungsprozedur eingegangen werden, die von dem Stellungsregler durchgeführt werden kann, um die wenigstens eine Kenngröße zu ermitteln.

Bei der Kenngröße-Ermittlungsprozedur werden die Bewegungsschritte des Ventilglieds 2 durchgeführt, insbesondere mit einer vorbestimmten Schrittlänge. Dies erfolgt beispielsweise mittels einer von dem Positionsregler 4 durchgeführten Positionssteuerung. Bei jedem Bewegungsschritt speichert der Stellungsregler wenigstens einen Druckwert, wenigstens einen Positionswert und wenigstens einen Zeitwert. Der Stellungsregler 4 berechnet aus den gespeicherten Werten eine oder mehrere Kenngrößen für die Druck-Positions-Hysterese, Haftreibung und/oder das Nachlaufverhalten. Bevorzugt verwendet der Stellungsregler 4 diese Kenngrößen für eine Antriebstyp-spezifische Festlegung von Koeffizienten für eine von dem Stellungsregler 4 bereitgestellte Positionsregelung des Ventilglieds 2.

Die Kenngröße-Ermittlungsprozedur umfasst einen ersten Schritt S1, bei dem die Prozedur beginnt. Bei einem zweiten Schritt S2 wird geprüft, ob eine Wartezeit verstrichen ist. Ist die Wartezeit nicht verstrichen, wird der Schritt S2 wiederholt. Sofern die Wartezeit verstrichen ist, fährt die Prozedur mit einem dritten Schritt S3 fort, bei dem ein Start-Positionswert, ein Start-Druckwert und eine letzte Bewegungsrichtung des Ventilglieds 2 erfasst und gespeichert werden. Bei einem vierten Schritt S4 wird geprüft, ob alle Bewegungsschritte durchgeführt wurden. Sofern dies noch nicht erfolgt ist, fährt das Verfahren mit einem fünften Schritt S5 fort, bei dem der nächste Bewegungsschritt gestartet wird. Bei dem Schritt S6 wird geprüft, ob die halbe Schrittlänge erreicht wurde. Ist dies nicht der Fall, wird der Schritt S6 wiederholt. Ist die halbe Schrittlänge erreicht, dann fährt das Verfahren mit dem Schritt S7 fort, bei dem die Position des Ventilglieds 2 sowie der Arbeitsdruck beim Erreichen der Hälfte der Schrittlänge erfasst und als Halbschritt-Positionswert und Halbschritt-Druckwert gespeichert werden. Beim Schritt S8 wird geprüft, ob die volle Schrittlänge erreicht wurde. Ist dies nicht der Fall, wird der Schritt S8 wiederholt. Ist die volle Schrittlänge erreicht, dann fährt das Verfahren mit dem Schritt S9 fort, bei dem die Position des Ventilglieds 2 sowie der Arbeitsdruck beim Erreichen der vollen Schrittlänge erfasst und als Ganzschritt-Positionswert und Ganzschritt-Druckwert gespeichert werden. Beim Schritt S10 wird der Bewegungsschritt gestoppt, beispielsweise indem der Stellungsregler 4 die pneumatische Betätigung für diesen Bewegungsschritt beendet. Die Prozedur fährt mit dem Schritt S2 fort. Sofern beim Schritt S4 festgestellt wird, dass alle Bewegungsschritte durchgeführt wurden, fährt die Prozedur mit dem Schritt S11 fort, bei dem die Kenngrößen berechnet werden. Im Schritt S21 wird die Prozedur beendet.

Als Kenngröße werden insbesondere die Hysterese-Kenngröße, die Haftreibungs-Kenngröße und/oder die Nachlauf-Kenngröße berechnet.

Beispielsweise wird die Hysterese-Kenngröße aus den Start-Positionswerten, Start-Druckwerten und letzten Bewegungsrichtungen der einzelnen Bewegungsschritte berechnet (z.B. über richtungsabhängige Ausgleichsgeraden für die Start-Druckwerte in Abhängigkeit von der Position).

Beispielsweise wird die Haftreibungs-Kenngröße aus den letzten Bewegungsrichtungen, Start-Positionswerten, Start-Druckwerten, Halbschritt-Positionswerten, Halbschritt-Druckwerten, Ganzschritt-Positionswerten und Ganzschritt-Druckwerten ermittelt, z.B. über Quotienten aus Halbschritt-Druckänderung zu Ganzschritt-Druckänderungen, optional skaliert mit dem Quotienten der jeweils zugeordneten erfassten Positionsänderungen des Ventilglieds 2.

Beispielsweise wird die Nachlauf-Kenngröße aus den letzten Bewegungsrichtungen, Start-Positionswerten und Ganzschritt-Positionswerten jeweils vorangegangener Bewegungsschritte ermittelt. Die Nachlauf-Kenngröße beschreibt, wie weit sich die Position des Ventilglieds 2 noch verändert hat, nachdem die Pneumatikventile geschlossen wurden. Die Nachlauf-Kenngröße kann beispielsweise über ein Verhältnis aus einer Differenz zwischen einem Start-Positionswert und vorigem Ganzschritt-Positionswert zu einer vollen erfassten Schrittlänge ermittelt werden.

Optional führt der Stellungsregler 4 eine Nachbearbeitung von positionsabhängigen Kennwerten oder Kenngrößen durch (z.B. durch Mittelwert- oder Medianbildung oder Ausreißer-Eliminierung), um zu positionsunabhängigen Kenngrößen zu kommen.

Optional reduziert der Stellungsregler 4 die Anzahl von Kennwerten oder Kenngrößen (z.B. durch Linearkombinationen), um eine reduzierte Anzahl von Variablen für eine Festlegung von Regelparametern zu erhalten.

## Patentansprüche

1. Verfahren zur Ermittlung wenigstens einer Kenngröße einer Prozessventil-Baueinheit (20), die einen Stellungsregler (4) und eine von dem Stellungsregler (4) pneumatisch betätigbare Antriebseinheit (50) aufweist, wobei die Antriebseinheit (50) über einen pneumatischen Ventilantrieb (3) und eine von dem pneumatischen Ventilantrieb (3) angetriebene Prozessarmatur (1) verfügt, umfassend die Schritte:
- pneumatisches Betätigen des Ventilantriebs (3) mit einem Arbeitsdruck, um mit einem Ventilglied (2) der Prozessarmatur (1) einen Bewegungsablauf durchzuführen,
- Erfassen von Druckwerten des Arbeitsdrucks und Positionswerten des Ventilglieds (2) während des Bewegungsablaufs, und
- Ermitteln der wenigstens einen Kenngröße aus den erfassten Druckwerten und Positionswerten, wobei die wenigstens eine Kenngröße eine Bewegungseigenschaft und/oder eine Reibungseigenschaft der Antriebseinheit (50) betrifft.

2. Verfahren nach Anspruch 1, wobei die wenigstens eine Kenngröße eine Haftreibungs-Kenngröße umfasst, die eine einer Bewegung des Ventilglieds (2) entgegenwirkende Haftreibung der Antriebseinheit (50) beschreibt, und/oder eine Hysterese-Kenngröße, die eine Hysterse eines Druck-Positions-Verlaufs beschreibt, wobei der Druck der Arbeitsdruck ist und die Position die Position des Ventilglieds (2) ist, und/oder eine Nachlauf-Kenngröße, die einen Nachlauf des Ventilglieds (2) nach Beendigung einer pneumatischen Betätigung beschreibt.

3. Verfahren nach einem voranstehenden Anspruch, ferner umfassend den Schritt: Anpassen wenigstens eines Regelungsparameters des Stellungsreglers (4) auf Basis der wenigstens einen Kenngröße.

4. Verfahren nach einem voranstehenden Anspruch, wobei das Verfahren im Rahmen einer Systeminitialisierung des Stellungsreglers (4) durchgeführt wird.

5. Verfahren nach einem voranstehenden Anspruch, wobei der Bewegungsablauf eine Mehrzahl an aufeinanderfolgenden, in eine erste Richtung gerichteten ersten Bewegungsschritten (24) umfasst, und nach jedem ersten Bewegungsschritt (24) eine Wartezeit eingehalten wird, bevor der direkt nachfolgende erste Bewegungsschritt (24) begonnen wird, und für jeden ersten Bewegungsschritt (24) wenigstens ein erster Druckwert des Arbeitsdrucks und ein erster Positionswert des Ventilglieds erfasst wird und die wenigstens eine Kenngröße auf Basis der erfassten ersten Druckwerte und der erfassten ersten Positionswerte ermittelt wird.

6. Verfahren nach Anspruch 5, wobei für jeden ersten Bewegungsschritt (24) beim Erreichen eines vorbestimmten Teils (25) der Schrittlänge ein Teil-Schrittlänge-Druckwert (26) erfasst wird, wobei der Teil-Schrittlänge-Druckwert (26) die Differenz zwischen dem Arbeitsdruck beim Erreichen des Teils (25) der Schrittlänge und dem Arbeitsdruck vor dem Beginn des jeweiligen ersten Bewegungsschritts (24) ist, und beim Erreichen der vollen Schrittlänge ein Volle-Schrittlänge-Druckwert (27) erfasst wird, der die Differenz zwischen dem Arbeitsdruck beim Erreichen der vollen Schrittlänge und dem Arbeitsdruck vor Beginn des jeweiligen ersten Bewegungsschritts (24) ist, und die wenigstens eine Kenngröße eine/die Haftreibungs-Kenngröße umfasst, die auf Basis der Teil-Schrittlänge-Druckwerte (26) und der Volle-Schrittlänge-Druckwerte (27) berechnet wird und eine Haftreibung der Antriebseinheit (50) anzeigt.

7. Verfahren nach Anspruch 5 oder 6, wobei der Bewegungsablauf ferner eine Mehrzahl an aufeinanderfolgenden, in eine der ersten Richtung entgegengesetzten zweiten Richtung gerichteten zweiten Bewegungsschritten (28) umfasst, und nach jedem zweiten Bewegungsschritt (28) eine Wartezeit eingehalten wird, bevor der direkt nachfolgende zweite Bewegungsschritt (28) begonnen wird, und für jeden zweiten Bewegungsschritt (28) wenigstens ein zweiter Druckwert des Arbeitsdrucks und ein zweiter Positionswert des Ventilglieds (2) erfasst wird und die wenigstens eine Kenngröße unter Berücksichtigung der zweiten Druckwerte und der zweiten Positionswerte ermittelt wird.

8. Verfahren nach Anspruch 7, wobei die wenigstens eine Kenngröße eine/die Hysterese-Kenngröße umfasst, die eine Hysterese eines von den ersten Druckwerten, ersten Positionswerte, zweiten Druckwerten und zweiten Positionswerten gebildeten Druck-Positions-Verlaufs betrifft.

9. Verfahren nach Anspruch 8, wobei die Hysterese-Kenngröße auf Basis einer ersten Ausgleichsgeraden (31) und einer zweiten Ausgleichsgeraden (32) ermittelt wird, wobei die erste Ausgleichsgerade (31) für einen ersten Druck-Positions-Verlauf der ersten Druckwerte und ersten Positionswerte ermittelt wird und die zweite Ausgleichsgerade (32) für einen zweiten Druck-Positions-Verlauf der zweiten Druckwerte und zweiten Positionswerte ermittelt wird.

10. Verfahren nach einem der Ansprüche 4 bis 9, wobei die wenigstens eine Kenngröße eine/die Nachlauf-Kenngröße umfasst, die einen Nachlauf des Ventilglieds (2) nach einer Beendigung einer pneumatischen Betätigung des Ventilantriebs (3) betrifft, und wobei ein Start-Positionswert (34) erfasst wird, der eine Startposition des Ventilglieds (2) bei einem Bewegungsschritt (24) anzeigt, und die Nachlauf-Kenngröße auf Basis des Start-Positionswerts (34) und eines End-Positionswerts (35) eines direkt vorangegangenen Bewegungsschritts (24) ermittelt wird.

11. Prozessventil-Baueinheit (20), die einen Stellungsregler (4) und eine von dem Stellungsregler (4) pneumatisch betätigbare Antriebseinheit (50) aufweist, wobei die Antriebseinheit (50) über einen Ventilantrieb (3) und eine von dem Ventilantrieb (3) angetriebene Prozessarmatur (1) verfügt, wobei der Stellungsregler (4) ausgebildet ist, den Ventilantrieb (3) mit einem Arbeitsdruck pneumatisch zu betätigen, um mit einem Ventilglied (2) der Prozessarmatur (1) einen Bewegungsablauf durchzuführen, Druckwerte des Arbeitsdrucks und Positionswerte des Ventilglieds (2) während des Bewegungsablaufs zu erfassen, und wenigstens eine Kenngröße aus den erfassten Druckwerten und Positionswerten zu ermitteln, wobei die wenigstens eine Kenngröße eine Bewegungseigenschaft und/oder eine Reibungseigenschaft der Antriebseinheit (50) betrifft.

12. Prozessventil-Baueinheit (20) nach Anspruch 11, wobei die Prozessventil-Baueinheit (20) ausgebildet ist, ein Verfahren gemäß einem der Ansprüche 2 bis 10 auszuführen.
